# EUROPÄISCHE PATENTSCHRIFT

(11) **EP 0 965 549 B1**
(45) Veröffentlichungstag und Bekanntmachung des Hinweises auf die Patenterteilung: **15.01.2003**
(21) Anmeldenummer: 99109159.6
(22) Anmeldetag: 10.05.1999
(51) Int. Cl.: B65H 45/101, B65H 45/20

(54) **Verfahren zur Faltenbildung bei Filtern**
Method of forming folds in filters
Procédé pour former des plis dans des filtres

(30) Priorität: 19.06.1998 DE 19825636
(43) Veröffentlichungstag der Anmeldung: 22.12.1999
(73) Patentinhaber: Carl Freudenberg KG, 69469 Weinheim (DE)
(72) Erfinder: Schlör, Ulrich, 64297 Darmstadt (DE)

(56) Entgegenhaltungen:
- EP-A- 0 705 635
- DE-A- 19 743 890
- US-A- 5 225 649

## Beschreibung

### Technisches Gebiet

Die Erfindung behandelt ein Verfahren zur Faltenbildung bei der Herstellung von Filtern aus in Bahnen vorliegenden Faservliesstoffen.

### Stand der Technik

Es ist allgemeiner Stand der Technik, die Faltenbildung bei der Herstellung von Filtern nach zwei grundsätzlichen Verfahren vorzunehmen.

Beim ersten Verfahren werden für den Faltvorgang Messerfaltmaschinen eingesetzt. Die von einer Rolle abgewickelte Faservliesstoffbahn wird zwei gegenläufig sich bewegenden Faltmessern zugeführt und dort zick-zack-förmig gefaltet. Von der dann zick-zack-förmig vorliegenden Bahn werden einzelne Teile abgetrennt und zu Filterelementen weiterverarbeitet.

Bei dem zweiten Verfahren wird die von der Rolle abgewickelte Faservliesstoffbahn durch zwei Prägewalzen geführt und dort mit Faltlinien für die spätere Faltung versehen. Die Faltung selbst erfolgt in einer Aufstelleinheit die eine oszilierende Bewegung ausführt. Nach Bildung der zick-zack-förmigen Faltung werden von der Bahn einzelne Elemente abgetrennt und zu Filtern verarbeitet.

Beide bekannte Verfahren sind sehr kostenintensiv da sowohl die Messerfaltmaschine als auch die Rotationsmaschine sehr hochpräzise Einrichtungen sind. Hinzu kommt, daß beide Einrichtungen sehr unflexibel sind, daß heißt sie sind immer nur für einen vorgegebenen Faltvorgang einsetzbar. Jede neue Faltgeometrie benötigt eine eigene Einrichtung.

### Darstellung der Erfindung

Der Erfindung liegt deshalb die Aufgabe zugrunde, ein Verfahren zur Faltenbildung zu schaffen, das möglichst einfach ist und eine hohe Flexibilität aufweist.

Die Lösung der gestellten Aufgabe wird bei einem Verfahren zur Faltenbildung bei der Herstellung von Filtern aus in Bahnen vorliegenden Faservliesstoffen erfindungsgemäß dadurch erreicht, daß die Faservliesstoffbahn mit vorbestimmter Geschwindigkeit über eine ebene Unterlage hinwegbewegt wird und daß an den vorgesehenen Faltstellen der Bahn durch einen dreidimensional frei verfahrbaren Energiekopf eine Materialabtragung in Form von Abbrand und/oder Einschmelzen der Fasern oder eine Materialverdichtung erfolgt. Dieses neue Verfahren umgeht die Messerfaltmaschine. Auch die sehr teuere Rotationseinrichtung für die Herstellung von Prägelinien entfällt. An die Stelle der Messerfaltmaschine oder der Rotationseinrichtung wird eine Laserstrahleinrichtung oder eine Ultraschallschweißvorrichtung eingesetzt. Die Laserstrahleinrichtung wird so eingestellt, daß sie auf der Faservliesstoffbahn eine Materialabtragung in Form von Abbrand und/ oder Einschmelzen vornimmt, die ausreichend ist für den späteren Faltvorgang. Der Materialabtrag kann beispielsweise 1/6 bis 1/3 der Materialstärke der Bahn betragen. Beim Einsatz von Ultraschallschweißvorrichtungen erfolgt an den Faltstellen eine Verdichtung des Materials.

Der besondere Vorteil des neuen Verfahrens liegt jedoch in der dredimensionalen Beweglichkeit des Energiekopfes über der in einer Ebene ausgerichteten Bahn. Vergleichbar mit dem Kopf eines Industrieplotters ist der Energiekopf in beliebiger Richtung zu bewegen. Es können folglich beliebige Filtergeometrien hergestellt werden. Die Bewegungen des Energiekopfes werden vorher in das Steuergerät für den Energiekopf einprogrammiert.

Die Verwendung eines Ultraschallgenerators zur Unterstützung einer Prägeeinheit beim Definieren der Knicklinie ist durch die DE-OS 197 43 890 an sich bekannt. Bei dieser Einrichtung werden jedoch die bekannten Prägestempel beibehalten, welche sich über die gesamte Länge der Knicklinie erstrecken. Die Ultraschallanbindung der Prägestempel erhöht lediglich deren Wirkung. Bei der vorliegenden Erfindung dagegen werden Energieköpfe verwendet, die punktuell wirken und die sich fortlaufend entlang der vorgesehenen Knicklinie bewegen. Die bisherigen Prägestempel entfallen.

Mit dem neuen Verfahren kann äußerst schnell mit sehr geringem Aufwand jede gewünschte Filtergeometrie hergestellt werden. Hierzu ist keine Veränderung der Apparatur notwendig, sondern lediglich eine Neueinstellung des Steuerprogramms ist vorzunehmen. Jede denkbare Faltung kann von der Laserstrahleinrichtung, beziehungsweise der Ultraschallvorrichtung vorgezeichnet werden.

Bei vielen wechselseitig ausgeführten Faltvorgängen ist es günstig wenn die Materialabtragung oder die Materialverdichtung an der Faservliesstoffbahn im Wechsel auf der Ober- und Unterseite der Faservliesstoffbahn erfolgt. Bei der einfachsten Ausführungsform eines Filters, bei dem der Filter zick-zack-förmig gefaltet ist, ist diese wechselseitige Herstellung der Faltstellen sehr zweckmäßig. Es ist aber auch möglich und insbesondere bei der Materialverdichtung günstig, wenn die Verdichtung der Faservliesstoffbahn sowohl von der Oberals auch von der Unterseite erfolgt und der Vliesstoff zur Materialbahnmitte hin verdichtet wird.

Das Verfahren kann sowohl bei Faservliesstoffbahnen aus nur einer Vliesschicht als auch bei Faservliesstoffbahnen aus mehreren Vliesschichten angewendet werden. Dieses ist in erster Linie vom Einsatzgebiet des Filters abhängig.

Nach der Materialabtragung beziehungsweise Materialverdichtung wird die Faservliesstoffbahn einer Aufstelleinheit zugeführt und dort dreidimensional ausgerichtet, einer Fixierung unter Anwendung von Hitze und Druck unterworfen.

Anhand eines Ausführungsbeispiels wird die Erfindung nachstehend näher erläutert.

### Ausführung der Erfindung

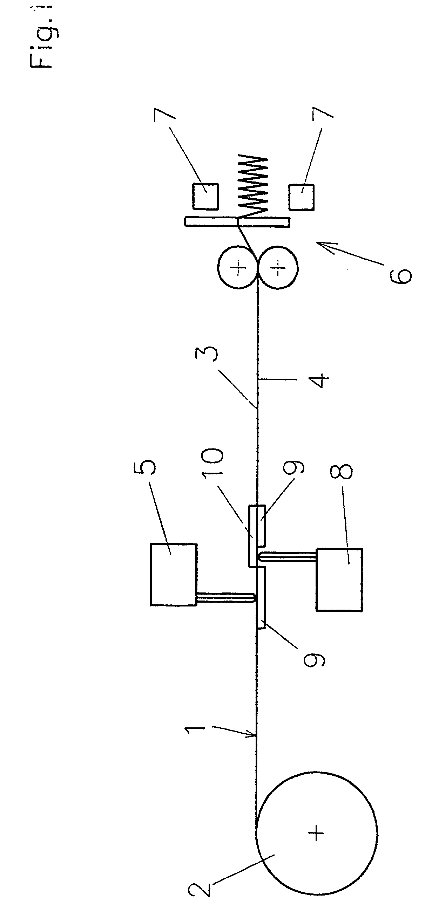

In der Figur ist schematisch eine Einrichtung zur Durchführung des Verfahrens dargestellt. Die Faservliesstoffbahn 1 wird von der Rolle 2 abgezogen und soll einer zick-zack-förmigen Faltung unterworfen werden. Hierfür wird die Faservliesstoffbahn 1 an den vorgesehenen Faltstellen durch die Materialabtragungen in ihrer Dicke verringert. Die Materialabtragungen sind rinnenförmig ausgebildet und erstrecken sich über die gesamte Breite der Faservliesstoffbahn 1. Die Materialabtragungen sind im Wechsel auf der Oberseite 3 beziehungsweise der Unterseite 4 angebracht.

In gleicher Weise kann an der Faservliesstoffbahn 1 an den Faltstellen auch eine Materialverdichtung durch Ultraschallverschweißen vorgenommen werden. Die Ultraschallverschweißung ergibt rinnenförmige Vertiefungen die wechselseitig auf der Oberseite 3 beziehungsweise Unterseite 4 der Faservliesstoffbahn 1 angebracht sind.

In der Figur sind sehr vereinfacht, die wesentlichen Verfahrensschritte an einer Faltvorrichtung angedeutet. Die Faservliesstoffbahn 1 wird von der Rolle 2 abgezogen und einer Laserstrahleinrichtung 5, 8, beziehungsweise Ultraschallschweißvorrichtung 5, 8 zugeführt. Der Energiekopf 5, 8 ist doppelt vorhanden, nämlich einmal für die Behandlung der Oberseite 3 der Faservliesstoffbahn 1 und einmal zur Behandlung der Unterseite 4 der Faservliesstoffbahn 1. Nach entsprechender Behandlung wird die Faservliesstoffbahn 1 kontinuierlich der Aufstelleinheit 6 zugeführt und zick-zack-förmig gefaltet. Der Faltung folgt die Fixierung durch die Fixiervorrichtung 7. Unterhalb des Energiekopfes 5 befindet sich die ebene Unterlage 9, über welche die Bahn 1 gezogen wird. Im Wirkungsbereich des Energiekopfes 8 ist die Unterlage 9 unterbrochen, um freien Zugang zur Unterseite 4 der Bahn 1 für den Energiekopf 8 zu ermöglichen. Grundsätzlich ist es möglich die ebene Bahn 1 mit einem Laserstrahl auch ohne Unterlage zu behandeln. Insbesondere bei der Ultraschallverschweißung ist jedoch eine dem Energiekopf gegenüberliegende Unterlage von Vorteil. Deshalb ist im Beispiel eine dem Energiekopf 8 gegenüberliegende Unterlage 10 angebracht, die als Gegenstück zum Energiekopf 8 wirkt.

## Patentansprüche

1. Verfahren zur Faltenbildung bei der Herstellung von Filtern aus in Bahnen vorliegenden Faservliesstoffen, **dadurch gekennzeichnet, daß** die Faservliesstoffbahn (1) mit vorbestimmter Geschwindigkeit über eine ebene Unterlage (9, 10) hinwegbewegt wird und daß an den vorgesehenen Faltstellen der Bahn (1) durch einen dreidimensional frei verfahrbaren Energiekopf (5, 8) eine Materialabtragung in Form von Abbrand und/oder Einschmelzen der Fasern oder eine Materialverdichtung erfolgt.

2. Verfahren nach Anspruch 1, **dadurch gekennzeichnet, daß** der Energiekopf (5, 8) einen Laserstrahl aussendet.

3. Verfahren nach Anspruch 1, **dadurch gekennzeichnet, daß** der Energiekopf (5, 8) einen Ultraschallstempel aufweist.

4. Verfahren nach einem der Ansprüche 1 bis 3, **dadurch gekennzeichnet, daß** die Materialabtragung oder die Materialverdichtung auf der Ober- und Unterseite (3, 4) der Faservliesstoffbahn (1) erfolgt.

5. Verfahren nach einem der Ansprüche 1 bis 4, **dadurch gekennzeichnet, daß** die Faservliesstoffbahn (1) aus mehreren Vliesschichten besteht.

6. Verfahren nach einem der Ansprüche 1 bis 5, **dadurch gekennzeichnet, daß** die Faservliesstoffbahn (1) nach der Materialabtragung oder Materialverdichtung einer Aufstelleinheit (6) zugeführt und dort dreidimensional ausgerichtet, einer Fixierung unter Anwendung von Hitze und Druck unterworfen wird.

## Claims

1. A process for forming folds in the production of filters from fibrous nonwovens in the form of continuous sheets, **characterized in that** the fibrous nonwoven continuous sheet (1) is moved at a predetermined speed over a planar surface (9, 10) and **in that** the prospective fold locations in this sheet (1) are subjected to an operation of material removal in the form of fibre burn-off and/or melt-back or of material compaction by the action of an energy head (5, 8) which is freely manoeuvrable in three dimensions.

2. A process according to claim 1, **characterized in that** the energy head (5, 8) emits a laser beam.

3. A process according to claim 1, **characterized in that** the energy head (5, 8) comprises an ultrasonic probe.

4. A process according to any one of claims 1 to 3, **characterized in that** the material removal or compaction operation takes place on the upper and lower surfaces (3, 4) of the fibrous nonwoven continuous sheet (1).

5. A process according to any one of claims 1 to 4, **characterized in that** the fibrous nonwoven continuous sheet (1) is composed of a plurality of web layers.

6. A process according to any one of claims 1 to 5, **characterized in that** the fibrous nonwoven continuous sheet (1) after the material removal or compaction operation is fed to a stand-up unit (6), three-dimensionally oriented there and subjected to a setting operation employing heat and pressure.

## Revendications

1. Procédé pour former des plis lors de la fabrication de filtres formés de matériaux non-tissés se présentant sous forme de bande, **caractérisé en ce que** l'on fait passer la bande (1) de matériau non-tissé avec une vitesse déterminée sur une base plane (9, 10) et **en ce que** l'on procède, au niveau des points de pliure de la bande (1), à un enlèvement de matériau sous forme de combustion et/ou de fonte des fibres ou à une compression du matériau grâce à une tête délivrant de l'énergie (5,8)pouvant effectuer librement un déplacement tridimensionnel.

2. Procédé selon la revendication 1, **caractérisé en ce que** la tête délivrant de l'énergie (5, 8) émet un rayon laser.

3. Procédé selon la revendication 1, **caractérisé en ce que** la tête délivrant de l'énergie (5, 8) comprend un poinçon à ultrasons.

4. Procédé selon l'une quelconque des revendications 1 à 3, **caractérisé en ce que** l'enlèvement de matériau ou la compression de matériau s'effectue sur le dessus et sur le dessous (3, 4) de la bande (1) de matériau non-tissé.

5. Procédé selon l'une quelconque des revendications 1 à 4, **caractérisé en ce que** la bande (1) de matériau non-tissé est formée de plusieurs couches de non-tissé.

6. Procédé selon l'une quelconque des revendications 1 à 5, **caractérisé en ce que** la bande (1) de matériau non-tissé est amenée, après l'enlèvement de matériau ou la compression de matériau, vers une unité de dressage où, après avoir été ajustée de manière tridimensionnelle, elle est soumise à un fixage par la chaleur et la pression.
